# EUROPEAN PATENT SPECIFICATION

(11) **EP 4 411 878 B1**
(45) Date of publication and mention of the grant of the patent: **17.09.2025**
(21) Application number: 23189166.4
(22) Date of filing: 02.08.2023
(51) Int. Cl.: H01M 4/36, H01M 4/58, H01M 4/62, H01M 10/0525

(54) **ELECTRODE FOR RECHARGEABLE LITHIUM BATTERY AND RECHARGEABLE LITHIUM BATTERY INCLUDING THE SAME**
ELEKTRODE FÜR EINE WIEDERAUFLADBARE LITHIUMBATTERIE UND WIEDERAUFLADBARE LITHIUMBATTERIE DAMIT
ÉLECTRODE POUR BATTERIE AU LITHIUM RECHARGEABLE ET BATTERIE AU LITHIUM RECHARGEABLE COMPRENANT CELLE-CI

(30) Priority: 06.02.2023 KR 20230015564
(43) Date of publication of application: 07.08.2024
(73) Proprietor: Samsung SDI Co., Ltd., Yongin-si, Gyeonggi-do 17084 (KR)
(72) Inventor: AN, Hoyong, Yongin-si, Gyeonggi-do 17084 (KR); KIM, Suhyun, Yongin-si, Gyeonggi-do 17084 (KR); KIM, Hyunhee, Yongin-si, Gyeonggi-do 17084 (KR)
(74) Representative: Marks & Clerk LLP

(56) References cited:
- JP-A- 2018 026 261
- US-A1- 2015 221 452

## Description

### BACKGROUND OF THE INVENTION

### (a) Field of the Invention

An electrode for a rechargeable lithium battery and a rechargeable lithium battery including the same are disclosed.

### (b) Description of the Related Art

A portable information device such as a cell phone, a laptop, a smart phone, and the like or an electric vehicle has used a rechargeable lithium battery having high energy density and easy portability as a driving power source. The rechargeable lithium battery usually has a structure of a positive electrode, a negative electrode, and a separator disposed therebetween. In addition, the positive electrode and the negative electrode respectively include a current collector and an active material layer formed on the current collector.

Recently, research on using the rechargeable lithium battery with high energy density as a power source for driving hybrid vehicles or battery-powered vehicles or storing electric power has been being actively made, and in this regard, there is a high interest in preventing overcharging or overheating and securing safety against physical impacts during the operation of the rechargeable lithium battery. JP 2018 026261 A relates to a nonaqueous electrolyte secondary battery. US 2015/221452 A1 relates to a current collector, an electrode, a secondary battery and a capacitor.

### SUMMARY OF THE INVENTION

Provided is an electrode for a rechargeable lithium battery capable of ensuring physical and thermal safety as well as electrochemical safety of the rechargeable lithium battery and minimizing energy density reduction.

In an embodiment, an electrode for a rechargeable lithium battery includes a current collector; an active material layer on the current collector; and a functional layer between the current collector and the active material layer, wherein the functional layer includes a first functional layer and a second functional layer, and the first functional layer includes a positive temperature coefficient (PTC) resin, and the second functional layer includes a lithium transition metal phosphate.

Another embodiment provides a rechargeable lithium battery including the electrode and an electrolyte.

At least some of the above and other features of the invention are set out in the claims.

In the rechargeable lithium battery including the electrode for a rechargeable lithium battery according to an embodiment, physical and thermal safety as well as electrochemical safety may be secured, and energy density reduction may be minimized.

### BRIEF DESCRIPTION OF THE DRAWINGS

FIGS. 1 and 2 are schematic views showing an electrode for a rechargeable lithium battery according to an embodiment, respectively.
FIG. 3 is a schematic view illustrating a rechargeable lithium battery according to an embodiment.

### DETAILED DESCRIPTION OF THE EMBODIMENTS

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present invention. The singular expression includes the plural expression unless the context clearly dictates otherwise.

The term "combination thereof" means a mixture, laminate, composite, copolymer, alloy, blend, reaction product, and the like of the constituents.

It should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

"Particle diameter" or "average particle diameter" may be measured by a method well known to those skilled in the art, for example, may be measured by a particle size analyzer, or may be measured by a transmission electron micrograph or a scanning electron micrograph. Alternatively, it is possible to obtain an average particle diameter value by measuring using a dynamic light scattering method, performing data analysis, counting the number of particles for each particle size range, and calculating from this. Unless otherwise defined, the average particle diameter may refer to a diameter (D50) of particles having a cumulative volume of 50 volume% in the particle size distribution.

"Weight average molecular weight" may be measured by gel permeation chromatography (GPC) with respect to polystyrene standard samples.

"Thickness" may be measured through a photograph taken with an optical microscope such as a scanning electron microscope.

### Electrode

In an embodiment, an electrode for a rechargeable lithium battery includes a current collector; an active material layer on the current collector; and a functional layer between the current collector and the active material layer, wherein the functional layer includes a first functional layer and a second functional layer, the first functional layer includes a positive temperature coefficient (PTC) resin, and the second functional layer includes a lithium transition metal phosphate.

Since the lithium transition metal phosphate is a low exothermic material, when a short circuit occurs due to overcharging in a rechargeable lithium battery including the electrode of an embodiment, as a current does not flow directly to the current collector but flows to an active material ↔ the second functional layer ↔ the current collector, the lithium transition metal phosphate induces reduction of Joule heat. Accordingly, when a short circuit occurs due to the overcharging in the rechargeable lithium battery including the electrode of an embodiment, an overall exothermic amount is reduced, securing safety and reliability.

However, when the second functional layer including the lithium transition metal phosphate alone is introduced into the electrode, it is difficult to respond to physical and thermal issues as well as electrochemical issues due to the overcharging. In this regard, into the electrode of an embodiment, the first functional layer including the positive temperature coefficient resin in addition to the second functional layer including the lithium transition metal phosphate is introduced.

The "positive temperature coefficient resin" has relatively low resistance at room temperature and passes the current well, but when exposed to a temperature environment of greater than or equal to about 100 °C and particularly, greater than or equal to about 110 °C, exhibits sharply increased resistance about 1,000 times or higher than its normal state. According to Ohm's law, when the current is constant, a voltage increases in proportion to an increase in resistance. Accordingly, when the rechargeable lithium battery including the electrode of an embodiment reaches an abnormal temperature (about 100 °C or higher, particularly about 110 °C or higher) due to internal exothermicity by the overcharging and the like, the first functional layer including the positive temperature coefficient resin may limit movement of lithium ions and electrons, while increasing internal resistance of the rechargeable lithium battery, thereby shutting down the rechargeable lithium battery.

Furthermore, the positive temperature coefficient resin has high tensile strength and may enhance safety against physical impacts such as penetration, crush, bending, etc., which are applied from the outside of the rechargeable lithium battery including the electrode of an embodiment.

In brief, the rechargeable lithium battery including the electrode of an embodiment may secure electrochemical (particularly, overcharge) safety through the second functional layer including the lithium transition metal phosphate and also, physical and thermal safety through the first functional layer including the positive temperature coefficient resin, resulting in minimizing energy density reduction, no matter what issues occur.

Hereinafter, elements constituting an electrode of an embodiment are described in more detail.

### Structure of Functional Layer

As described above, the functional layer includes a first functional layer and a second functional layer, the first functional layer includes a positive temperature coefficient resin, and the second functional layer includes a lithium transition metal phosphate.

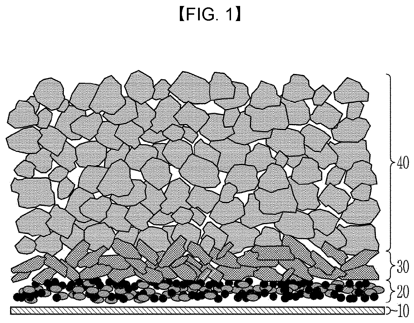

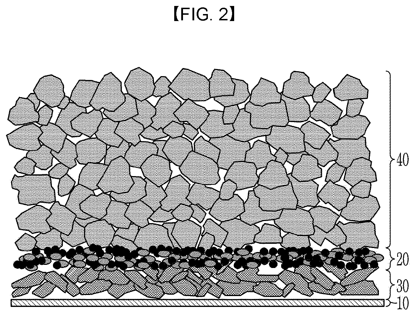

A stacking order of the first functional layer and the second functional layer is not limited. FIGS. 1 and 2 are schematic views showing an electrode for a rechargeable lithium battery according to an embodiment, respectively. As shown in FIG. 1, the first functional layer 20 may contact the current collector 10 while the second functional layer 30 may contact the active material layer 40. Alternatively, as shown in FIG. 2, the first functional layer 20 may contact the active material layer 40 while the second functional layer 30 may contact the current collector 10.

Both of the cases are appropriate, but the case of FIG. 1 may more appropriately respond to various issues occurring in rechargeable lithium batteries. In some embodiments, the case of contact the first functional layer with the current collector, compared with the other case of contacting the first functional layer with an active material, may induce the current on the current collector to flow from the active material layer ↔ the second functional layer ↔ the first functional layer ↔ the current collector and thus reduce Joule heat. In addition, the first functional layer may also have an effect of adhering the active material layer to the current collector. Simultaneously, when the second functional layer is in contact with the active material, compared with when the second functional layer is in contact with the current collector, the former may better respond to external physical impacts or fire applied to the rechargeable lithium batteries, internal exothermicity due to a short circuit between the active material layer and the separator during the overcharging, and the like.

A thickness ratio of the first functional layer and the second functional layer may be about 1:10 to about 10:1, about 3:7 to about 7:3 and specifically about 3:5 to about 5:5. Within these ranges, the first functional layer and the second functional layer are harmonized, so that electrochemical, physical, and thermal safety may be evenly secured.

On the other hand, a thickness ratio of an entire functional layer composed of the first functional layer and the second functional layer; and the active material layer may be about 1:1 to about 1:1,000, about 1:5 to about 1:100, about 1:10 to about 1:50, or about 1:10 to about 1:20. Within these ranges, functions of the entire functional layer and the active material layer are harmonized, so that electrochemical, physical, and thermal safety can be secured by the entire functional layer, while capacity can be secured by the active material layer.

For example, a thickness of the first functional layer may be about 0.5 to about 10 µm, about 1 to about 10 µm, or about 1 to about 5 µm. In addition, a thickness of the second functional layer may be about 0.5 to about 10 µm, about 1 to about 10 µm, or about 1 to about 5 µm. In addition, a thickness of the active material layer may be about 10 to about 200 µm, about 20 to about 150 µm, or about 50 to about 130 µm.

### First Functional Layer

The first functional layer includes the positive temperature coefficient resin, thereby ensuring physical and thermal safety of the rechargeable lithium battery. The positive temperature coefficient resin may be a polymer resin that expands in a temperature range of about 60 to about 200 °C, about 90 to about 200 °C, about 100 to about 150 °C, or about 100 to about 120 °C so that so that a shutdown function may be exhibited when the rechargeable lithium battery reaches an abnormal temperature (about 60 °C or greater, especially about 80 °C or greater).

Because such a polymer resin expands near a melting temperature (Tm), a crystalline polyolefin resin having a melting point of about 100 to about 150 °C may be used. For example, the positive temperature coefficient resin may include high density polyethylene (HDPE), polypropylene (PP), low density polyethylene (LDPE), polystyrene (PS), polytetrafluoroethylene (PTFE), polyvinyl chloride (PVC), or a combination thereof. Table 1 shows a density and a melting point of the exemplified positive temperature coefficient resins. For reference, the density may be measured in an ASTM D1238 method, and the melting point is measured in an ASTM D2117 method.

**(Table 1)**

| | Density (g/cm³): measured value according to ASTM D1238 measurement method | Melting point (°C): measured value by ASTM D2117 measurement method |
|---|---|---|
| HDPE | 0.941 to 0.965 | 130 |
| PP | 0.89 to 0.91 | 150 |
| LDPE | 0.910 to 0.925 | 105 |
| PS | 1.04 to 1.07 | 105 |
| PTFE | 2.14 to 2.21 | 330 (Tg 130 °C) |
| PVC | 1.16 to 1.3 | 90 |

Specifically, low density polyethylene used as the positive temperature coefficient resin is a polymer with high tensile strength and expands at about 105 °C. Accordingly, the low density polyethylene, which may be used as the positive temperature coefficient resin, may harmoniously secure physical and thermal safety of a rechargeable lithium battery. The positive temperature coefficient resin may have a weight average molecular weight of about 5,000 to about 200,000 g/mol and a D50 particle diameter of about 0.5 µm to about 5 µm.

The first functional layer includes the positive temperature coefficient resin and may further include a first conductive material, a first binder, or a combination thereof. For example, the first functional layer may include aggregates of the positive temperature coefficient resin and the first conductive material under the presence of the first binder.

The aggregates of the positive temperature coefficient resin, the first conductive material, and the first binder, when the positive temperature coefficient resin thermally expands around a fusion region, become apart from one another and destroy a conductive network of the first conductive material, hindering tunneling of electrons and thereby, rapidly increasing electrical resistance. This phenomenon itself may also be referred to as a positive temperature coefficient (PTC) phenomenon.

On the other hand, when the positive temperature coefficient resin is fused and thermally expands, as a dispersion state of the first conductive material changes, a new conductive network may be formed in the form of greatly reducing the resistance. This phenomenon may be referred to as a negative temperature coefficient (NTC) phenomenon.

The first conductive material may include, for example, a carbon material, a metal material, a metal carbide, a metal nitride, a metal silicide, or a combination thereof. The carbon material may include carbon black, graphite, a carbon fiber, carbon nanotube (CNT), L-carbon nanotube (long length CNT), or a combination thereof. The carbon black may be, for example, acetylene black, ketjen black, channel black, furnace black, lamp black, thermal black, or a combination thereof and the graphite may include natural graphite, artificial graphite, or a combination thereof. The metal material may be a metal particle or a metal fiber of nickel. The metal carbide may include, for example, WC, B₄C, ZrC, NbC, MoC, TiC, TaC, or a combination thereof, the metal nitride may include TiN, ZrN, TaN, or a combination thereof, and the metal silicide may include, for example, WSi₂, MoSi₂, or a combination thereof. A D50 particle diameter of the first conductive material may be about 1 to about 100 nm, or about 5 to about 50 nm.

The first binder may play a role of attaching well materials in the first functional layer to each other and adhering well the functional layer to the active material layer. The first binder may be a non-water-soluble binder, a water-soluble binder, or a combination thereof. In some embodiments, the first binder may be a non-water-soluble binder and may include a polyvinylidene fluoride-based binder, a polyamide-based binder, or a combination thereof. For example, the polyvinylidene fluoride-based binder may include polyvinylidene fluoride, polyvinylidene fluoride-co-hexafluoropropylene, polyvinylidene fluoride-co-trichloroethylene, polyvinylidene fluoride-co-tetrafluoroethylene, polyvinylidene fluoride-co-trifluoroethylene, polyvinylidene fluoride-co-trifluorochloroethylene, polyvinylidene fluoride-co-ethylene, or a combination thereof. In addition, the polyamide-based binder may include polyamide, polyamideimide, or a combination thereof. For example, when LDPE is used, when the rechargeable lithium battery including the electrode of an embodiment reaches a temperature (about 100 °C or higher and particularly, about 110 °C or higher), the LDPE may expand and block the current.

Based on 100 wt% of the total amount of the first functional layer, the positive temperature coefficient resin may be included in an amount of about 5 to about 80 wt%, or about 20 to about 60 wt%; the first conductive material may be included in an amount of about 0.1 to about 50 wt%, about 0.5 to about 50 wt%, or about 10 to about 50 wt%, and the first binder may be included in an amount of about 0.1 to about 50 wt%, about 0.5 to about 50 wt%, or about 1 to about 20 wt%. Within these ranges, the positive temperature coefficient resin and the first conductive material may form aggregates at a suitable aggregation degree due to the first binder, and the aggregates may harmonize the positive temperature coefficient phenomenon and the negative temperature coefficient phenomenon.

### Second Functional Layer

The second functional layer includes the lithium transition metal phosphate, through which electrochemical safety of a rechargeable lithium battery is secured. The lithium transition metal phosphate may be a material with an olivine-based crystal structure capable of not only inducing reduction of Joule heat and increasing capacity or an output but also expressing capacity as an active material.

For example, it may include a compound represented by Chemical Formula 1, a compound represented by Chemical Formula 2, or a combination thereof.

[Chemical Formula 1] Liₐ₁M¹ₓ₁Fe₍₁₋ₓ₁₎PO₄

In Chemical Formula 1, 0.90 ≤ a1 ≤ 1.5, 0 ≤ x1 ≤ 0.4, and M¹ is Mg, Co, Ni or a combination thereof.

[Chemical Formula 2] Liₐ₂Mnₓ₂Fe₍₁₋ₓ₂₎PO₄

In Chemical Formula 2, 0.90 ≤ a2 ≤ 1.5, and 0.1 ≤ x2 ≤ 1.

The compound represented by Chemical Formula 1 may be a lithium iron phosphate compound. A mole fraction of lithium in Chemical Formula 1 may be appropriately adjusted between approximately 0.9 and 1.5, and may be, for example, 0.90 ≤ a1 ≤ 1.2 or 0.95 ≤ a1 ≤ 1.1. In Chemical Formula 1, Mn may be present in addition to Fe, and a mole fraction thereof may be 0 ≤ x1 ≤ 0.3, 0 ≤ x1 ≤ 0.1, or 0 ≤ x1 ≤ 0.05.

The compound represented by Chemical Formula 2 may be a lithium manganese iron compound (lithium manganese iron phosphate). In Chemical Formula 2, a mole fraction of lithium in Chemical Formula 2 may be 0.90 ≤ a2 ≤ 1.2 or 0.95 ≤ a2 ≤ 1.1. In Chemical Formula 2, a mole fraction of manganese may be 0.2 ≤ x2 ≤ 0.9, 0.3 ≤ x2 ≤ 0.9, or 0.4 ≤ x2 ≤ 0.8, and in particular, when 0.5 ≤ x2 ≤ 0.9, lithium ion conductivity is high. For example, the second functional layer may include LiFePO₄, LiMn_{0.5}Fe_{0.5}PO₄, LiMnPO₄, and the like as the lithium transition metal phosphate.

A D50 particle size of the lithium transition metal phosphate may be greater than 0 µm, greater than or equal to about 0.3 µm, and less than or equal to about 5 µm, less than or equal to about 3 µm, less than or equal to 2 µm, or less than or equal to about 1 µm.

The second functional layer may further include a second conductive material, a second binder, or a combination thereof while including the lithium transition metal phosphate.

The second conductive material may form a conductive network connected to the active material layer via the current collector and the first functional layer. The second conductive material may include, for example, a carbon material, a metal material, a metal carbide, a metal nitride, a metal silicide, or a combination thereof. The carbon material may include carbon black, graphite, a carbon fiber, carbon nanotube (CNT), L-carbon nanotube (long length CNT), or a combination thereof. The carbon black may be, for example, acetylene black, ketjen black, channel black, furnace black, lamp black, thermal black, or a combination thereof and the graphite may include natural graphite, artificial graphite, or a combination thereof. The metal material may be a metal particle or a metal fiber of nickel. The metal carbide may include, for example, WC, B₄C, ZrC, NbC, MoC, TiC, TaC, or a combination thereof, the metal nitride may include TiN, ZrN, TaN, or a combination thereof, and the metal silicide may include, for example, WSi₂, MoSi₂, or a combination thereof. A D50 particle diameter of the second conductive material may be about 1 to about 100 nm, or about 5 to about 50 nm.

The second binder may play a role of attaching well materials in the second functional layer to each other and adhering well the functional layer to the active material layer. The second binder may be a water-insoluble binder, a water-soluble binder, or a combination thereof. For example, the second binder may include a polyvinyl chloride-based binder as a water-insoluble binder. The polyvinyl chloride-based binder may be, for example, polyvinyl chloride.

Based on 100 wt% of the total amount of the second functional layer, the lithium transition metal phosphate may be included in an amount of about 50 to about 99 wt%, or about 80 to about 97 wt%; the second conductive material may be included in an amount of about 0.5 to about 10 wt%, or about 1 to about 7 wt%, and the second binder may be included in an amount of about 0.5 to about 20 wt%, or about 1 to about 10 wt%. Within these ranges, each function of the lithium transition metal phosphate, the second conductive material, and the second binder may be harmonized.

### Active Material Layer

The electrode may be a positive electrode, and the active material layer may include a positive electrode active material.

The positive electrode active material may include lithiated intercalation compounds that reversibly intercalate and deintercalate lithium ions. Examples of the positive electrode active material include a compound represented by any one of the following chemical formulas:

LiₐA_{1-b}X_{b}D₂ (0.90 ≤ a ≤ 1.8, 0 ≤ b ≤ 0.5);

LiₐA_{1-b}X_{b}O_{2-c}D_{c} (0.90 ≤ a ≤ 1.8, 0 ≤ b ≤ 0.5, 0 ≤ c ≤ 0.05);

LiₐE_{1-b}X_{b}O_{2-c}D_{c} (0.90 ≤ a ≤ 1.8, 0 ≤ b ≤ 0.5, 0 ≤ c ≤ 0.05);

LiₐE_{2-b}X_{b}O_{4-c}D_{c} (0.90 ≤ a ≤ 1.8, 0 ≤ b ≤ 0.5, 0 ≤ c ≤ 0.05);

LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤ 2);

LiₐNi_{1-b-c}Co_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Co_{b}X_{c}O_{2-α}T₂(0.90 ≤ a ≤ 1.8, 0 ≤ b ≤ 0.5, 0 ≤ c ≤ 0.05, 0 < α < 2);

LiₐNi_{1-b-c}Mn_{b}X_{c}D_{α} (0.90 ≤ a ≤ 1.8, 0 ≤ b ≤ 0.5, 0 ≤ c ≤ 0.05, 0 < α ≤ 2);

LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2);

LiₐNi_{1-b-c}Mn_{b}X_{c}O_{2-α}T₂ (0.90 ≤ a ≤ 1.8, 0 ≤ b ≤ 0.5, 0 ≤ c ≤ 0.05, 0 < α < 2);

LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1);

LiₐNi_{b}Co_{c}Mn_{d}GeO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1);

LiₐNiG_{b}O₂ (0.90 ≤ a ≤ 1.8, 0.001 ≤ b ≤ 0.1);

LiₐCoG_{b}O₂ (0.90 ≤ a ≤ 1.8, 0.001 ≤ b ≤ 0.1);

LiₐMn_{1-b}G_{b}O₂ (0.90 ≤ a ≤ 1.8, 0.001 ≤ b ≤ 0.1);

LiₐMn₂G_{b}O₄ (0.90 ≤ a ≤ 1.8, 0.001 ≤ b ≤ 0.1);

LiₐMn_{1-g}G_{g}PO₄ (0.90 ≤ a ≤ 1.8, 0 ≤ g ≤ 0.5);

QO₂; QS₂; LiQS₂;

V₂Os; LiV₂O₅;

LiZO₂;

LiNiVO₄;

Li_{(3-f)}J₂(PO₄)₃ (0 ≤ f ≤ 2);

Li_{(3-f)}Fe₂(PO₄)₃ (0 ≤ f ≤ 2);

LiₐFePO₄ (0.90 ≤ a ≤ 1.8).

In the above chemical formulas, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a combination thereof. A method of forming the coating layer may be a method that does not adversely affect physical properties of the positive electrode active material, for example, spray coating, dipping, and the like.

The positive electrode active material may include, for example, lithium cobalt composite oxide represented by Chemical Formula 3.

[Chemical Formula 3] Liₐ₃COₓ₃M²_{y3}O₂

In Chemical Formula 3, 0.9≤a3≤1.8, 0.3≤x3≤0.98, 0.01≤y3≤0.69, and M² is selected from Al, Mn, B, Ce, Cr, Cu, F, Mg, Mo, Nb, P, S, Si, Sr, Ti, V, W, Zr, and a combination thereof.

In Chemical Formula 3, for example, 0.4≤x3≤0.98 and 0.01≤y3≤0.59; 0.5≤x3≤0.98 and 0.01≤y3≤0.49; 0.6≤x3≤0.98 and 0.01≤y3≤0.39; 0.7≤x3≤0.98 and 0.01≤y3≤0.29: 0.8≤x3≤0.98 and 0.01≤y3≤0.19; or 0.9≤x3≤0.98, 0.01≤y3≤0.09.

The positive electrode active material layer may include a positive electrode active material, and may further include a third conductive material, a third binder, or a combination thereof. Here, a content of the positive electrode active material may be about 85 to about 98 wt%, for example, about 90 to about 95 wt% based on the total weight of the positive electrode active material layer. Contents of the third binder and the third conductive material may be about 1 wt% to about 10 wt%, for example, about 1 wt% to about 5 wt%, respectively, based on the total weight of the positive electrode active material layer.

The third binder serves to attach well the positive electrode active material particles to each other and to attach well the positive electrode active material to the current collector, and examples thereof may include polyvinyl alcohol, carboxymethylcellulose, hydroxypropylcellulose, diacetylcellulose, polyvinylchloride, carboxylated polyvinylchloride, polyvinylfluoride, polymers containing ethylene oxide, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The third conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

### Current Collector

The current collector may be selected from an aluminium foil, a copper foil, a nickel foil, a stainless-steel foil, a titanium foil, a nickel foam, a copper foam, a polymer substrate coated with a conductive metal, or a combination thereof. When the electrode of an embodiment is a positive electrode, an aluminium foil may be used as the current collector, but is not limited thereto.

### Rechargeable Lithium Battery

In an embodiment, a rechargeable lithium battery includes a positive electrode, a negative electrode, and an electrolyte between the positive electrode and the negative electrode.

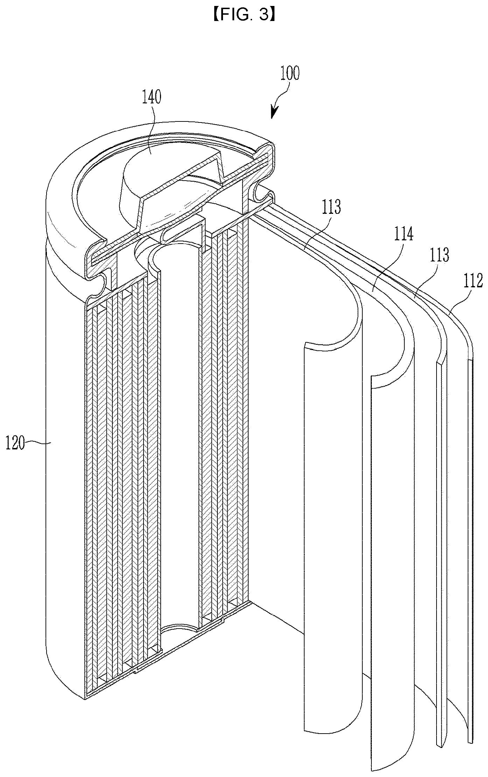

FIG. 3 is a schematic view illustrating a rechargeable lithium battery according to an embodiment. Referring to FIG. 3, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte for a rechargeable lithium battery impregnated in the positive electrode 114, negative electrode 112, and separator 113, a battery case 120 housing the battery cell, and a sealing member 140 sealing the battery case 120.

In the rechargeable lithium battery of an embodiment, the aforementioned electrode may be applied to the positive electrode alone, to the negative electrode alone, or applied to both the positive electrode and the negative electrode. For example, the rechargeable lithium battery of an embodiment may be one in which the aforementioned electrode is applied to the positive electrode alone.

Hereinafter, descriptions overlapping with those described above are omitted, and elements constituting the rechargeable lithium battery other than the positive electrode are described in detail.

### Negative Electrode

The negative electrode includes a current collector and a negative electrode active material layer on the current collector and including a negative electrode active material. According to an embodiment, the negative electrode may have a structure in which a current collector, a negative electrode active material layer, a functional layer, and an adhesive layer are sequentially stacked.

The negative electrode active material may include a material that reversibly intercalates/deintercalates lithium ions, a lithium metal, a lithium metal alloy, a material capable of doping and dedoping lithium, or a transition metal oxide.

The material that reversibly intercalates/deintercalates lithium ions may include, for example crystalline carbon, amorphous carbon, or a combination thereof as a carbon-based negative electrode active material. The crystalline carbon may be irregular, plate, flake, spherical, or fiber-shaped natural graphite or artificial graphite. The amorphous carbon may be a soft carbon, a hard carbon, a mesophase pitch carbonization product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0 < x < 2), a Si-Q alloy, wherein Q is an alkali metal, an alkaline-earth metal, a Group 13 element, a Group 14 element, a Group 15 element, a Group 16 element, a transition metal, a rare earth element, and a combination thereof, but not Si, and the Sn-based negative electrode active material may include Sn, SnO₂, a Sn-R alloy, wherein R is an alkali metal, an alkaline-earth metal, a Group 13 element, a Group 14 element, a Group 15 element, a Group 16 element, a transition metal, a rare earth element, and a combination thereof, but not Sn. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The silicon-carbon composite may be for example a silicon-carbon composite including a core including crystalline carbon and silicon particles and an amorphous carbon coating layer disposed on the surface of the core. The crystalline carbon may be artificial graphite, natural graphite, or a combination thereof. The amorphous carbon precursor may be a coal-based pitch, mesophase pitch, petroleum-based pitch, coal-based oil, petroleum-based heavy oil, or a polymer resin such as a phenol resin, a furan resin, or a polyimide resin. In this case, the content of silicon may be about 10 wt% to about 50 wt% based on the total weight of the silicon-carbon composite. In addition, the content of the crystalline carbon may be about 10 wt% to about 70 wt% based on the total weight of the silicon-carbon composite, and the content of the amorphous carbon may be about 20 wt% to about 40 wt% based on the total weight of the silicon-carbon composite. In addition, a thickness of the amorphous carbon coating layer may be about 5 nm to about 100 nm. An average particle diameter (D50) of the silicon particles may be about 10 nm to about 20 µm. The average particle diameter (D50) of the silicon particles may be preferably about 10 nm to about 200 nm. The silicon particles may exist in an oxidized form, and in this case, an atomic content ratio of Si:O in the silicon particles indicating a degree of oxidation may be a weight ratio of about 99:1 to about 33:66. The silicon particles may be SiOₓ particles, and in this case, the range of x in SiOₓ may be greater than about 0 and less than about 2. In the present specification, As used herein, when a definition is not otherwise provided, an average particle diameter (D50) indicates a diameter of particles having a cumulative volume of 50 volume% in the particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1 : 99 to about 90 : 10.

In the negative electrode active material layer, the negative electrode active material may be included in an amount of about 95 wt% to about 99 wt% based on the total weight of the negative electrode active material layer.

In an embodiment, the negative electrode active material layer further includes a binder, and may optionally further include a conductive material. The content of the binder in the negative electrode active material layer may be about 1 wt% to about 5 wt% based on the total weight of the negative electrode active material layer. In addition, when the conductive material is further included, the negative electrode active material layer may include about 90 wt% to about 98 wt% of the negative electrode active material, about 1 wt% to about 5 wt% of the binder, and about 1 wt% to about 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

Examples of the water-insoluble binder include polyvinyl chloride, carboxylated polyvinyl chloride, polyvinyl fluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluororubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li. An amount of the thickener used may be about 0.1 parts by weight to about 3 parts by weight based on 100 parts by weight of the negative electrode active material.

The conductive material is included to provide electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, carbon nanotube, and the like; a metal-based material of a metal powder or a metal fiber including copper, nickel, aluminium, silver, and the like; a conductive polymer such as a polyphenylene derivative; or a mixture thereof.

The negative electrode current collector may include one selected from a copper foil, a nickel foil, a stainless-steel foil, a titanium foil, a nickel foam, a copper foam, a polymer substrate coated with a conductive metal, and a combination thereof.

### Electrolyte

The electrolyte includes a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, or aprotic solvent. Examples of the carbonate-based solvent include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent include methyl acetate, ethyl acetate, n-propyl acetate, dimethyl acetate, methyl propionate, ethyl propionate, γ-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like and the ketone-based solvent may be cyclohexanone, and the like. In addition, the alcohol-based solvent may be ethyl alcohol, isopropyl alcohol, etc. and the aprotic solvent may be nitriles such as R-CN, where R is a C2 to C20 linear, branched, or cyclic hydrocarbon group and may include a double bond, an aromatic ring, or an ether bond, amides such as dimethylformamide, dioxolanes such as 1,3-dioxolane, sulfolanes, and the like.

The non-aqueous organic solvent may be used alone or in a mixture. When the non-aqueous organic solvent is used in a mixture, the mixture ratio may be controlled in accordance with a desirable battery performance.

In addition, in the case of the carbonate-based solvent, a mixture of a cyclic carbonate and a chain carbonate may be used. In this case, when the cyclic carbonate and the chain carbonate are mixed in a volume ratio of about 1:1 to about 1:9, the electrolyte solution may exhibit excellent performance.

The non-aqueous organic solvent may further include an aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

The aromatic hydrocarbon-based solvent may be an aromatic hydrocarbon-based compound represented by Chemical Formula I.

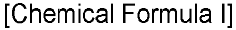

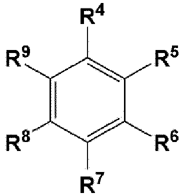

In Chemical Formula I, R⁴ to R⁹ are the same or different and are selected from hydrogen, a halogen, a C1 to C10 alkyl group, a haloalkyl group, and a combination thereof.

Specific examples of the aromatic hydrocarbon-based solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte solution may further include vinylene carbonate or an ethylene carbonate-based compound represented by Chemical Formula II in order to improve cycle-life of a battery.

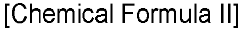

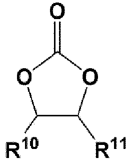

In Chemical Formula II, R¹⁰ and R¹¹ are the same or different and selected from hydrogen, a halogen, a cyano group, a nitro group, and fluorinated C1 to C5 alkyl group, provided that at least one of R¹⁰ and R¹¹ is a halogen, a cyano group, a nitro group, and fluorinated C1 to C5 alkyl group, and R¹⁰ and R¹¹ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. The amount of the additive for improving cycle-life may be used within an appropriate range.

The lithium salt dissolved in the non-aqueous organic solvent supplies lithium ions in a battery, enables a basic operation of a rechargeable lithium battery, and improves transportation of the lithium ions between positive and negative electrodes.

Examples of the lithium salt include at least one supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide): LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer ranging from 1 to 20, lithium difluoro(bisoxolato) phosphate, LiCl, Lil, LiB(C₂O₄)₂ (lithium bis(oxalato) borate, LiBOB), and lithium difluoro(oxalato)borate (LiDFOB).

The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

### Separator

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte solution. For example, the separator may be selected from a glass fiber, polyester, Teflon, polyethylene, polypropylene, polytetrafluoroethylene, or a combination thereof. It may have a form of a non-woven fabric or a woven fabric. For example, in a lithium ion battery, a polyolefin-based polymer separator such as polyethylene and polypropylene is mainly used. In order to ensure the heat resistance or mechanical strength, a coated separator including a ceramic component or a polymer material may be used. Optionally, it may have a single-layered or multi-layered structure.

Rechargeable lithium batteries may be classified as lithium ion batteries, lithium ion polymer batteries, and lithium polymer batteries according to the presence of a separator and the type of electrolyte used therein. The rechargeable lithium batteries may have a variety of shapes and sizes, and include cylindrical, prismatic, coin, or pouch-type batteries, and may be thin film batteries or may be rather bulky in size. Structures and manufacturing methods for lithium ion batteries pertaining to this disclosure are well known in the art.

Hereinafter, examples of the present disclosure and comparative examples are described. It is to be understood, however, that the examples are for the purpose of illustration and are not to be construed as limiting the present disclosure.

### Preparation Example 1: Preparation of Positive Temperature Coefficient Resin Composition

As a positive temperature coefficient resin, LDPE resin particles with a weight average molecular weight (Mw) of 120,000 g/mol and a D50 particle diameter of 1 µm were used.

60 wt% of the LDPE resin particles as the positive temperature coefficient resin, 30 wt% of carbon black particles with a D50 particle diameter of 30 nm as a first conductive material, and 10 wt% of polyacrylic acid as a first binder were mixed in an aqueous solvent, preparing a positive temperature coefficient resin composition.

### Preparation Example 2: Preparation of Lithium Transition Metal Phosphate Composition

As a lithium transition metal phosphate, LiFePO₄ with a D50 particle diameter of 0.5 to 0.7 µm was used.

90 wt% of LiFePO₄ as the lithium transition metal phosphate and 5 wt% of carbon black particles with a D50 particle diameter of 30 nm as a second conductive material, and 5 wt% of polyvinylidene fluoride as a second binder were mixed in an N-methylpyrrolidone solvent, preparing a lithium transition metal phosphate composition.

### Preparation Example 3: Preparation of Positive Electrode Active Material Slurry

As a positive electrode active material, LiCoO₂ with a D50 particle diameter of 17 µm was used.

95 wt% of LiCoO₂ as the positive electrode active material, 3 wt% of polyvinylidene fluoride as a third binder, and 2 wt% of ketjen black as a third conductive material were mixed in an N-methylpyrrolidone solvent, preparing positive electrode active material slurry.

### Comparative Example 1: Manufacture of Positive Electrode Having Structure of Current Collector/Functional Layer (Preparation Example 1)/Active Material Layer (Preparation Example 3) and Rechargeable Lithium Battery Including the Same

### (1) Manufacture of Positive Electrode

The positive temperature coefficient resin composition of Preparation Example 1 was coated on one surface of an aluminium current collector and dried to form a 10 µm-thick functional layer. On the functional layer, the positive electrode active material slurry of Preparation Example 3 was coated and dried to form a 150 µm-thick positive electrode active material layer.

### (2) Manufacture of Negative Electrode

97.3 wt% of graphite as a negative electrode active material, 0.5 wt% of denka black, 0.9 wt% of carboxylmethyl cellulose, and 1.3 wt% of a styrene-butadiene rubber were mixed in an aqueous solvent, preparing negative electrode active material slurry. This slurry was coated on a copper foil and dried to form a negative electrode active material layer.

### (3) Manufacture of Battery Cells

The manufactured positive electrode, a separator with a polyethylene/polypropylene multi-layer structure, and the manufactured negative electrode were sequentially stacked to manufacture a pouch-type cell, and an electrolyte solution prepared by mixing ethylene carbonate and diethyl carbonate in a volume ratio of 50:50 and dissolving 1.0 M LiPF₆ lithium salt therein, manufacturing a rechargeable lithium battery cell.

### Examples 1 to 5: Manufacture of Positive Electrode Having Structure of Current Collector/Functional Layer (Preparation Example 1)/Second Functional Layer (Preparation Example 2)/ Active Material Layer (Preparation Example 3) and Rechargeable Lithium Battery Cells Including the Same

On one surface of an aluminium current collector, the positive temperature coefficient resin composition of Preparation Example 1 was coated and dried to form a first functional layer. On the first functional layer, the lithium transition metal phosphate composition of Preparation Example 2 was coated and dried to form a second functional layer. On the second functional layer, the positive electrode active material slurry of Preparation Example 3 was coated and dried to form a 150 µm-thick positive electrode active material layer. Herein, each positive electrode of Examples 1 to 5 was manufactured by changing a thickness ratio of the first functional layer and the second functional layer as shown in Table 2. Each rechargeable lithium battery cell of Examples 1 to 5 was manufactured in the same manner as in Comparative Example 1 except that the positive electrodes of Examples 1 to 5 were respectively used.

### Example 6: Manufacture of Positive Electrode Having Structure of Current Collector/First Functional Layer (Preparation Example 2)/Second Functional Layer (Preparation Example 1)/Active Material Layer (Preparation Example 3) and Rechargeable Lithium Battery Cells Including the Same

On one surface of an aluminium current collector, the lithium transition metal phosphate composition of Preparation Example 2 was coated and dried to form a 3 µm-thick first functional layer. On the first functional layer, the positive temperature coefficient resin composition of Preparation Example 1 was coated and dried to form a 3 µm-thick second functional layer. On the second functional layer, the positive electrode active material slurry of Preparation Example 3 was coated and dried to form a 150 µm-thick positive electrode active material layer. A rechargeable lithium battery cell of Example 6 was manufactured in the same manner as in Comparative Example 1 except that the obtained positive electrode was used.

**(Table 2)**

| | Components for each functional layer | | Thickness (µm) |
|---|---|---|---|
| Comparative Example 1 | functional layer (monolayer) | PTC (LDPE) | 10 |
| Example 1 | first functional layer | PTC (LDPE) | 1 |
| | second functional layer | LFP | 2 |
| Example 2 | first functional layer | PTC (LDPE) | 1 |
| | second functional layer | LFP | 5 |
| Example 3 | first functional layer | PTC (LDPE) | 1 |
| | second functional layer | LFP | 9 |
| Example 4 | first functional layer | PTC (LDPE) | 3 |
| | second functional layer | LFP | 5 |
| Example 5 | first functional layer | PTC (LDPE) | 5 |
| | second functional layer | LFP | 5 |
| Example 6 | first functional layer | LFP | 3 |
| | second functional layer | PTC (LDPE) | 3 |

### Evaluation Example 1: Evaluation of Positive Electrode

### (1) Resistance Increase Rate at High Temperature

The positive electrodes of Examples 1 to 6 and Comparative Example 1 were respectively used to manufacture a symmetry cell and after installing a temperature sensor and a resistance meter thereon, put in a temperature-varying chamber for evaluation. The rechargeable lithium battery cells were measured with respect to temperature and resistance changes, while the temperature was increased at 10 °C/min, to evaluate a resistance increase rate according to a temperature of each positive electrode, and the results are shown in Table 3.

### (2) Evaluation of Resistance Characteristics

The positive electrodes of Examples 1 to 6 and Comparative Example 1 were respectively mounted between two measuring pins on top and at bottom of the sheet resistance meter, and then, a current of 10 mA was applied thereto to measure resistance, and the results are shown in Table 3.

### (3) Adhesion Force

The positive electrodes of Examples 1 to 6 and Comparative Example 1 were respectively cut into a size of 25 mm X 100 mm to prepare specimens, and the specimens were measured with respect to 180 ° peel strength (unit: N/m) by using a peel strength meter at a peeling rate of 100 mm/min, a measurement distance of 25 mm, and 25 °C, and the results are shown in Table 3.

**(Table 3)**

| | Positive electrode resistance increase rate @ 120 °C (%) | Positive electrode resistance (%) | Positive electrode adhesion force (gf/mm) |
|---|---|---|---|
| Comparative Example 1 | 63 | 110 | 0.31 |
| Example 1 | 114 | 30 | 0.71 |
| Example 2 | 105 | 60 | 0.64 |
| Example 3 | 109 | 105 | 0.59 |
| Example 4 | 188 | 75 | 1.31 |
| Example 5 | 181 | 90 | 1.33 |
| Example 6 | 174 | 55 | 0.53 |

Referring to Table 3, the positive electrodes of Examples 1 to 6 were not only suppressed from the resistance increase at a high temperature but also exhibited excellent adhesion forces between current collector and functional layer, compared with the positive electrode of Comparative Example 1.

### Evaluation Example 2: Evaluation of Rechargeable Lithium Battery Cells

The rechargeable lithium battery cells of Examples 1 to 6 and Comparative Example 1 were constant current-charged at a current rate of 0.5 C to a voltage of 4.4 V (vs. Li) and cut off at a current rate of 0.05 C, while 4.4 V was maintained in a constant voltage mode at 25 °C. Subsequently, the cells were constant current-discharged to a voltage of 2.8 V (vs. Li) at a rate of 1.0 C. This charge and discharge cycle was 150 times repeated. In all the charge and discharge cycles, each charge and discharge was paused for 10 minutes.

The rechargeable lithium battery cells were evaluated with respect to cycle-life characteristics by using capacity retention according to Equation 1, and the results are shown in Table 4. Capacity retention = [discharge capacity at 150th cycle/discharge capacity at 1st cycle]×100

**(Table 4)**

| | Battery capacity retention @ 25 °C (%) |
|---|---|
| Comparative Example 1 | 83 |
| Example 1 | 93 |
| Example 2 | 91 |
| Example 3 | 84 |
| Example 4 | 90 |
| Example 5 | 88 |
| Example 6 | 91 |

Referring to Table 3, the rechargeable lithium battery cells of Examples 1 to 6 also exhibited excellent cycle-life characteristics at room temperature, compared with the rechargeable lithium battery cell of Comparative Example 1.

While this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims.

**<Description of Symbols>**

| | | | |
|---|---|---|---|
| 10: | current collector | 20: | first functional layer |
| 30: | third functional layer | 40: | active material layer |
| 100: | rechargeable lithium battery | | |
| 112: | negative electrode | | |
| 113: | separator | 114: | positive electrode |
| 120: | battery case | 140: | sealing member |

## Claims

1. An electrode for a rechargeable lithium battery, comprising
a current collector;
an active material layer on the current collector; and
a functional layer between the current collector and the active material layer,
wherein the functional layer includes a first functional layer and a second functional layer,
the first functional layer includes a positive temperature coefficient resin, and
the second functional layer includes a lithium transition metal phosphate.

2. The electrode of claim 1, wherein
the first functional layer is in contact with the current collector and the second functional layer is in contact with the active material layer.

3. The electrode of claim 1 or claim 2, wherein
a thickness ratio of the first functional layer and the second functional layer is about 3:7 to about 7:3.

4. The electrode of any one of claims 1 to 3, wherein
a thickness ratio of an entire functional layer composed of the first functional layer and the second functional layer; and the active material layer is about 1:1 to about 1:1,000.

5. The electrode of any one of claims 1 to 4, wherein
the positive temperature coefficient resin expands in a temperature range of about 60 to about 200 °C, optionally wherein:
the positive temperature coefficient resin includes high density polyethylene, polypropylene, low density polyethylene, polystyrene, polytetrafluoroethylene, polyvinyl chloride, or a combination thereof.

6. The electrode of any one of claims 1 to 5, wherein
the first functional layer further includes a first conductive material, a first binder, or a combination thereof, optionally wherein:
a D50 particle diameter of the first conductive material is about 1 to about 100 nm.

7. The electrode of claim 6, wherein
the first binder includes a polyvinylidene fluoride-based binder, a polyamide-based binder, or a combination thereof.

8. The electrode of claim 6 or claim 7, wherein
based on 100 wt% of the total amount of the first functional layer, the positive temperature coefficient resin is included in an amount of about 5 to about 80 wt%, the first conductive material is included in an amount of about 0.1 to about 50 wt%, and the first binder is included in an amount of about 0.1 to about 50 wt%.

9. The electrode of any one of claims 1 to 8, wherein
the lithium transition metal phosphate includes a compound represented by Chemical Formula 1, a compound represented by Chemical Formula 2, or a combination thereof:
[Chemical Formula 1] Liₐ₁M¹ₓ₁Fe₍₁₋ₓ₁₎PO₄
wherein, in Chemical Formula 1, 0.90 ≤ a1 ≤1.5, 0 ≤ x1 ≤ 0.4, and M¹ is Mg, Co, Ni or a combination thereof,
[Chemical Formula 2] Liₐ₂Mnₓ₂Fe₍₁₋ₓ₂₎PO₄
wherein, in Chemical Formula 2, 0.90 ≤ a2 ≤ 1.5 and 0.1 ≤ x2 ≤ 1.

10. The electrode of any one of claims 1 to 9, wherein
a D50 particle diameter of the lithium transition metal phosphate is less than or equal to about 2 µm.

11. The electrode of any one of claims 1 to 10, wherein
the second functional layer further includes a second conductive material, a second binder, or a combination thereof.

12. The electrode of claim 11, wherein:
(i) a D50 particle diameter of the second conductive material is about 1 to about 100 nm; and/or
(ii) the second binder includes a polyvinyl chloride-based binder; and/or
(iii) based on 100 wt% of the total amount of the second functional layer, about 50 to about 99 wt% of the lithium transition metal phosphate, about 0.5 to about 10 wt% of the second conductive material, and about 0.5 to about 20 wt% of the second binder are included.

13. The electrode of any one of claims 1 to 12, wherein
the electrode is a positive electrode, and the active material layer includes a positive electrode active material represented by Chemical Formula 3:
[Chemical Formula 3] Liₐ₃Coₓ₃M²_{y3}O₂
wherein, in Chemical Formula 3, 0.9≤a3≤1.8, 0.3≤x3≤0.98, 0.01≤y3≤0.69, and M² is selected from Al, Mn, B, Ce, Cr, Cu, F, Mg, Mo, Nb, P, S, Si, Sr, Ti, V, W, Zr, and a combination thereof.

14. The electrode of any one of claims 1 to 13, wherein
the active material layer further includes a third conductive material, a third binder, or a combination thereof, optionally wherein:
based on 100 wt% of the total amount of the active material layer, about 85 wt% to about 98 wt% of the positive electrode active material, about 1 wt% to about 10 wt% of the third conductive material, and about 1 wt% to about 10 wt% the fourth binder are included.

15. A rechargeable lithium battery, comprising
a positive electrode; a negative electrode; and an electrolyte,
wherein at least one of the positive electrode and the negative electrode is the electrode of any one of claims 1 to 14.

## Patentansprüche

1. Elektrode für eine wiederaufladbare Lithiumbatterie, umfassend einen Stromkollektor;
eine aktive Materialschicht auf dem Stromkollektor; und
eine funktionelle Schicht zwischen dem Stromkollektor und der aktiven Materialschicht,
wobei die funktionelle Schicht eine erste funktionelle Schicht und eine zweite funktionelle Schicht einschließt,
die erste funktionelle Schicht ein Harz mit einem positiven Temperaturkoeffizienten einschließt und
die zweite funktionelle Schicht ein Lithium-Übergangsmetall-Phosphat einschließt.

2. Elektrode nach Anspruch 1, wobei
die erste funktionelle Schicht in Kontakt mit dem Stromkollektor vorliegt und die zweite funktionelle Schicht in Kontakt mit der aktiven Materialschicht vorliegt.

3. Elektrode nach Anspruch 1 oder Anspruch 2, wobei
ein Dickenverhältnis der ersten funktionellen Schicht und der zweiten funktionellen Schicht etwa 3:7 bis etwa 7:3 beträgt.

4. Elektrode nach einem der Ansprüche 1 bis 3, wobei
ein Dickenverhältnis einer gesamten funktionellen Schicht, bestehend aus der ersten funktionellen Schicht und der zweiten funktionellen Schicht; und der aktiven Materialschicht etwa 1:1 bis etwa 1:1.000 beträgt.

5. Elektrode nach einem der Ansprüche 1 bis 4, wobei
das Harz mit positivem Temperaturkoeffizienten sich in einem Temperaturbereich von etwa 60 bis etwa 200 °C ausdehnt, wobei optional:
das Harz mit positivem Temperaturkoeffizienten Polyethylen hoher Dichte, Polypropylen, Polyethylen niedriger Dichte, Polystyrol, Polytetrafluorethylen, Polyvinylchlorid oder eine Kombination davon einschließt.

6. Elektrode nach einem der Ansprüche 1 bis 5, wobei
die erste funktionelle Schicht ferner ein erstes leitfähiges Material, ein erstes Bindemittel oder eine Kombination davon einschließt, wobei optional:
ein D50-Partikeldurchmesser des ersten leitfähigen Materials etwa 1 bis etwa 100 nm beträgt.

7. Elektrode nach Anspruch 6, wobei
das erste Bindemittel ein Bindemittel auf Polyvinylidenfluoridbasis, ein Bindemittel auf Polyamidbasis oder eine Kombination davon einschließt.

8. Elektrode nach Anspruch 6 oder Anspruch 7, wobei
basierend auf 100 Gew.-% der Gesamtmenge der ersten funktionellen Schicht das Harz mit positivem Temperaturkoeffizienten in einer Menge von etwa 5 bis etwa 80 Gew.- % eingeschlossen ist, das erste leitfähige Material in einer Menge von etwa 0,1 bis etwa 50 Gew.-% eingeschlossen ist und das erste Bindemittel in einer Menge von etwa 0,1 bis etwa 50 Gew.-% eingeschlossen ist.

9. Elektrode nach einem der Ansprüche 1 bis 8, wobei
das Lithium-Übergangsmetall-Phosphat eine durch chemische Formel 1 dargestellte Verbindung, eine durch chemische Formel 2 dargestellte Verbindung oder eine Kombination davon einschließt:
[Chemische Formel 1] Liₐ₁ M¹ ₓ₁Fe₍₁₋ₓ₁₎PO₄
wobei in chemischer Formel 1, 0,90 ≤ a1 ≤ 1,5, 0 ≤ x1 ≤ 0,4 und M¹ Mg, Co, Ni oder eine Kombination davon ist,
[Chemische Formel 2] Liₐ₂Mn_{X2}Fe₍₁₋ₓ₂)PO₄
wobei in chemischer Formel 2 0,90 ≤ a2 ≤ 1,5 und 0,1 ≤ x2 ≤ 1 ist.

10. Elektrode nach einem der Ansprüche 1 bis 9, wobei
ein D50-Partikeldurchmesser des Lithium-Übergangsmetall-Phosphats kleiner als oder gleich etwa 2 µm ist.

11. Elektrode nach einem der Ansprüche 1 bis 10, wobei
die zweite funktionelle Schicht ferner ein zweites leitfähiges Material, ein zweites Bindemittel oder eine Kombination davon einschließt.

12. Elektrode nach Anspruch 11, wobei:
(i) ein D50-Partikeldurchmesser des zweiten leitfähigen Materials etwa 1 bis etwa 100 nm beträgt; und/oder
(ii) das zweite Bindemittel ein Bindemittel auf Polyvinylchloridbasis einschließt; und/oder
(iii) bezogen auf 100 Gew.-% der Gesamtmenge der zweiten funktionellen Schicht etwa 50 bis etwa 99 Gew.-% des Lithium-Übergangsmetall-Phosphats, etwa 0,5 bis etwa 10 Gew.-% des zweiten leitfähigen Materials und etwa 0,5 bis etwa 20 Gew.-% des zweiten Bindemittels eingeschlossen sind.

13. Elektrode nach einem der Ansprüche 1 bis 12, wobei
die Elektrode eine positive Elektrode ist und die aktive Materialschicht ein aktives Material der positiven Elektrode einschließt, dargestellt durch chemische Formel 3:
[Chemische Formel 3] Liₐ₃Co_{X3}M²_{y3}O₂
wobei in chemischer Formel 3 0,9 ≤ a3 ≤ 1,8, 0,3 ≤ x3 ≤ 0,98, 0,01 ≤ y3 ≤ 0,69 ist und M² aus Al, Mn, B, Ce, Cr, Cu, F, Mg, Mo, Nb, P, S, Si, Sr, Ti, V, W, Zr und einer Kombination davon ausgewählt ist.

14. Elektrode nach einem der Ansprüche 1 bis 13, wobei
die aktive Materialschicht ferner ein drittes leitfähiges Material, ein drittes Bindemittel oder eine Kombination davon einschließt, wobei optional:
basierend auf 100 Gew.-% der Gesamtmenge der aktiven Materialschicht etwa 85 Gew.-% bis etwa 98 Gew.-% des aktiven Materials der positiven Elektrode, etwa 1 Gew.-% bis etwa 10 Gew.-% des dritten leitfähigen Materials und etwa 1 Gew.-% bis etwa 10 Gew.-% des vierten Bindemittels eingeschlossen sind.

15. Wiederaufladbare Lithiumbatterie, umfassend
eine positive Elektrode; eine negative Elektrode; und einen Elektrolyten,
wobei mindestens eine der positiven Elektrode und der negativen Elektrode die Elektrode nach einem der Ansprüche 1 bis 14 ist.

## Revendications

1. Électrode pour une batterie au lithium rechargeable, comprenant
un collecteur de courant ;
une couche de matériau actif sur le collecteur de courant ; et
une couche fonctionnelle entre le collecteur de courant et la couche de matériau actif,
dans laquelle la couche fonctionnelle inclut une première couche fonctionnelle et une seconde couche fonctionnelle,
la première couche fonctionnelle inclut une résine à coefficient de température positif, et
la second couche fonctionnelle inclut un phosphate de métal de transition et de lithium.

2. Électrode selon la revendication 1, dans laquelle
la première couche fonctionnelle est en contact avec le collecteur de courant et la seconde couche fonctionnelle est en contact avec la couche de matériau actif.

3. Électrode selon la revendication 1 ou la revendication 2, dans laquelle
un rapport d'épaisseur de la première couche fonctionnelle et de la seconde couche fonctionnelle est environ 3:7 à environ 7:3.

4. Électrode selon l'une quelconque des revendications 1 à 3, dans laquelle
un rapport d'épaisseur d'une couche fonctionnelle entière, composée de la première couche fonctionnelle et de la seconde couche fonctionnelle ; et la couche de matériau actif est environ 1:1 à environ 1:1000.

5. Électrode selon l'une quelconque des revendications 1 à 4, dans laquelle
la résine à coefficient de température positif se dilate dans une plage de températures d'environ 60 à environ 200 °C, facultativement dans laquelle :
la résine à coefficient de température positif inclut du polyéthylène haute densité, du polypropylène, du polyéthylène basse densité, du polystyrène, du polytétrafluoroéthylène, du polychlorure de vinyle ou une combinaison de ceux-ci.

6. Électrode selon l'une quelconque des revendications 1 à 5, dans laquelle
la première couche fonctionnelle inclut en outre un premier matériau conducteur, un premier liant ou une combinaison de ceux-ci, facultativement dans laquelle :
un diamètre de particule D50 du premier matériau conducteur est environ 1 à environ 100 nm.

7. Électrode selon la revendication 6, dans laquelle
le premier liant inclut un liant à base de fluorure de polyvinylidène, un liant à base de polyamide ou une combinaison de ceux-ci.

8. Électrode selon la revendication 6 ou la revendication 7, dans laquelle
sur la base de 100 % en poids de la quantité totale de la première couche fonctionnelle, la résine à coefficient de température positif est incluse en une quantité d'environ 5 à environ 80 % en poids, le premier matériau conducteur est inclus en une quantité d'environ 0,1 à environ 50 % en poids et le premier liant est inclus en une quantité d'environ 0,1 à environ 50 % en poids.

9. Électrode selon l'une quelconque des revendications 1 à 8, dans laquelle
le phosphate de métal de transition et de lithium inclut un composé représenté par la formule chimique 1, un composé représenté par la formule chimique 2 ou une combinaison de ceux-ci :
[Formule chimique 1] Liₐ₁ M¹ₓ₁Fe₍₁₋ₓ₁₎PO₄
dans laquelle, dans la formule chimique 1, 0,90 ≤ a1 ≤ 1,5, 0 ≤ x1 ≤ 0,4, et M¹ est Mg, Co, Ni ou une combinaison de ceux-ci,
[Formule chimique 2] Liₐ₂Mn_{X2}Fe₍₁₋ₓ₂₎PO₄
dans laquelle, dans la formule chimique 2, 0,90 ≤ a2 ≤ 1,5 et 0,1 ≤ x2 ≤ 1.

10. Électrode selon l'une quelconque des revendications 1 à 9, dans laquelle
un diamètre de particule D50 du phosphate de métal de transition et de lithium est inférieur ou égal à environ 2 µm.

11. Électrode selon l'une quelconque des revendications 1 à 10, dans laquelle
la seconde couche fonctionnelle inclut en outre un deuxième matériau conducteur, un deuxième liant ou une combinaison de ceux-ci.

12. Électrode selon la revendication 11, dans laquelle :
(i) un diamètre de particule D50 du deuxième matériau conducteur est environ 1 à environ 100 nm ; et/ou
(ii) le deuxième liant inclut un liant à base de polychlorure de vinyle ; et/ou
(iii) sur la base de 100 % en poids de la quantité totale de la seconde couche fonctionnelle, environ 50 à environ 99 % en poids du phosphate de métal de transition et de lithium, environ 0,5 à environ 10 % en poids du deuxième matériau conducteur et environ 0,5 à environ 20 % en poids du deuxième liant sont inclus.

13. Électrode selon l'une quelconque des revendications 1 à 12, dans laquelle
l'électrode est une électrode positive, et la couche de matériau actif inclut un matériau actif d'électrode positive représenté par la formule chimique 3 :
[Formule chimique 3] Liₐ₃Co_{X3}M²_{y3}O₂
dans laquelle, dans la formule chimique 3, 0,9≤a3≤ 1,8, 0,3≤x3≤0,98, 0,01≤y3≤ 0,69, et M² est choisi parmi Al, Mn, B, Ce, Cr, Cu, F, Mg, Mo, Nb, P, S, Si, Sr, Ti, V, W, Zr, et une combinaison de ceux-ci.

14. Électrode selon l'une quelconque des revendications 1 à 13, dans laquelle
la couche de matériau actif inclut en outre un troisième matériau conducteur, un troisième liant ou une combinaison de ceux-ci, facultativement dans laquelle :
sur la base de 100 % en poids de la quantité totale de la couche de matériau actif, environ 85 % en poids à environ 98 % en poids du matériau actif d'électrode positive, environ 1% en poids à environ 10 % en poids du troisième matériau conducteur et environ 1 % en poids à environ 10 % en poids du quatrième liant sont inclus.

15. Batterie au lithium rechargeable, comprenant :
une électrode positive ; une électrode négative ; et un électrolyte,
dans laquelle au moins l'une de l'électrode positive et de l'électrode négative est l'électrode selon l'une quelconque des revendications 1 à 14.
